# EUROPÄISCHE PATENTSCHRIFT

(11) **EP 1 666 848 B1**
(45) Veröffentlichungstag und Bekanntmachung des Hinweises auf die Patenterteilung: **03.07.2013**
(21) Anmeldenummer: 05016649.5
(22) Anmeldetag: 01.08.2005
(51) Int. Cl.: G01D 5/347

(54) **Körper mit einer Winkelskalierung**
Body with angular scale
Objet avec échelle d'angle

(30) Priorität: 24.11.2004 DE 102004056671
(43) Veröffentlichungstag der Anmeldung: 07.06.2006
(73) Patentinhaber: Dr. Johannes Heidenhain GmbH, 83292 Traunreut (DE)
(72) Erfinder: Brandl, Sebastian, 83352 Altenmarkt (DE); Hertenberger, Jürgen, 84155 Bodenkirchen/Aich (DE)

(56) Entgegenhaltungen:
- EP-A- 0 664 441
- EP-A- 1 457 762
- DE-A1- 19 936 237

## Beschreibung

Die Erfindung betrifft einen Körper mit einer Winkelskalierung gemäß dem Anspruch 1, wie er insbesondere als Träger für eine Maßverkörperung in Winkelmesssystemen einsetzbar ist.

Derartige Winkelmesssysteme dienen zur Messung von Drehbewegungen bzw. Drehstellungen eines Maschinenteils, etwa einer Welle, an der dann ein Körper mit einer Winkelskalierung drehfest fixiert ist. Die Winkelskalierung kann beispielsweise eine optische oder eine magnetische Teilung aufweisen, die entsprechend abgetastet werden kann. Dabei wird die Drehbewegung entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in so genannten Pick-and-Place-Maschinen in der Fertigung von elektronischen Bauteilen verwendet, oder in Werkzeugmaschinen für die Messung von rotatorischen Bewegungen eingesetzt. Die Reproduzierbarkeit, bzw. Wiederholbarkeit der Messung von Drehwinkeln von Maschinenteilen auf nur wenige Winkelsekunden genau ist beispielsweise bei den extrem dynamischen Pick-and-Place-Maschinen von großer Bedeutung. Bei Werkzeugmaschinen ist insbesondere die absolute Genauigkeit der Messergebnisse eines Winkelmesssystems entscheidend. Häufig sind Winkelmesssysteme derart ausgestaltet, dass diese keine eigene Lagerung der relativ zueinander drehbaren Bauteile aufweisen.

Die Genauigkeit einer Winkelmessung wird wesentlich durch die Güte der Winkelskalierung, der Formgenauigkeit des Körpers, der die Winkelskalierung trägt, und durch die Rundlauf-Abweichung der Lagerung beeinflusst. Wichtig ist in diesem Zusammenhang auch eine möglichst kleine Exzentrizität des Körpers in Bezug auf die Lagerung. Darüber hinaus müssen insbesondere bei hochdynamische Anwendungen derartige Körper extrem starr mit dem entsprechend Maschineteil verbunden sein und darüber hinaus muss der Körper selbst möglichst verdreh- bzw. torsionssteif ausgestaltet sein, damit präzise Messergebisse erzielbar sind.

In dem Prospekt "Winkelmessgeräte" vom Februar 2004 der Firma Heidenhain ist auf der Seite 23 ein Einbau-Winkelmessgerät (Typ ERA bzw. ERM) gezeigt, welches eine Teilungstrommel aufweist, die als ein monolithischer Körper ausgestaltet ist. Ein innerer Ringbereich dieser Teilungstrommel ist zum Verbinden mit einer Welle flanschartig ausgestaltet.

Die vorbekannten Vorrichtungen weisen den Nachteil auf, dass vergleichsweise hohe Anforderungen an die Montagefläche, beispielsweise an der Stirnseite einer Welle, und / oder Aufspannfläche des Körpers zu stellen sind, damit keine Verschlechterungen der Messergebnisse, bzw. der Messsignale auftreten.

Der Erfindung liegt die Aufgabe zugrunde, einen Körper mit einer Winkelskalierung zur Messung der Drehstellung eines Maschinenteils zu schaffen, welcher sich insbesondere dadurch auszeichnet, dass dieser auch dann überaus gute Messergebnisse liefert, wenn vergleichsweise große Maß-Toleranzen des Maschinenteils bzw. der Aufspannfläche des Körpers vorliegen.

Diese Aufgabe wird durch einen Körper mit einer Winkelskalierung gemäß dem Anspruch 1 gelöst. Demnach ist der Körper mit einer Winkelskalierung monolithisch ausgebildet und dient zur Messung der Drehstellung bzw. Drehbewegung eines Maschinenteils um eine Achse. Der Körper weist einen ersten Ringbereich und einen zweiten Ringbereich, sowie einen Stegbereich auf. Der erste Ringbereich ist zum Verbinden mit dem Maschinenteil flanschartig ausgestaltet. Am zweiten Ringbereich ist die Winkelskalierung angeordnet. Der Stegbereich befindet sich bezüglich einer radial ausgerichteten Linie zwischen dem ersten Ringbereich und dem zweiten Ringbereich. Dabei weist der Stegbereich in Richtung der Achse eine geometrische Ausdehnung d₃ auf, welche mindestens dreimal kleiner ist als die größte geometrische Ausdehnung d₂ des zweiten Ringbereichs in Richtung der Achse. Somit gelten die Bedingungen: d₃ ≤ ¹/₃·d₂, bzw. d₂/d₃ ≥ 3.

Es zeigte sich, dass sich mit den erfindungsgemäßen Körpern mit einer Winkelskalierung wesentlich bessere Messergebnisse erzielen lassen als mit herkömmlichen, insbesondere wenn vergleichsweise ungenaue Montageflächen an den Maschinenteilen vorliegen. Es wurde herausgefunden, dass bei konventionellen Körpern Messfehler wegen - wenn auch geringer - Verformungen in axialer Richtung (Planschlag) und in Radialrichtung im Bereich der Winkelskalierung entstehen. Durch die spezielle geometrische Ausgestaltung des Stegbereichs im Verhältnis zum zweiten Ringbereich werden die maßgeblichen Verformungen des zweiten Ringbereiches, welcher die Winkelskalierung trägt, nunmehr bei erfindungsgemäßen Körpern minimiert. Trotz der vorgenommen Veränderungen, insbesondere trotz Querschnittsreduzierungen, wurde überraschenderweise die Torsionssteifigkeit des Körpers selbst nicht in der Weise beeinflusst, dass diese eine Verschlechterung der Messgenauigkeit zur Folge hat. In Summe wurde, wie erwähnt, im Vergleich zu herkömmlichen Winkelmesssystemen die Messgenauigkeit bei relativ grob tolerierten Montageflächen sogar wesentlich verbessert.

Unter dem Begriff monolithisch ist im Folgenden zu verstehen, dass ein so bezeichneter Körper aus einem Stück besteht, so dass dieser etwa durch einen Drehprozess beispielsweise aus einem Stahl- oder Aluminiumhalbzeug mit vergleichsweise geringem Aufwand gefertigt werden kann.

Der erste Ringbereich ist derart ausgestaltet, dass dieser flanschartig mit einem Maschinenteil, etwa mit einem Wellenende, verbunden werden kann. Flansche ermöglichen eine Montage zweier Maschinenteile unter Aufbringung von axial gerichteten Fixierkräften. Häufig weisen Flansche zu diesem Zweck entlang einer Kreislinie versetzt angeordnete Bohrungen auf durch die Befestigungsmittel, beispielsweise Schrauben, zum Eingriff kommen und so bezüglich des betreffenden Maschinenteils axial gerichtete Halte- oder Fixierkräfte erzeugbar sind.

Die Winkelskalierung kann am zweiten Ringbereich beispielsweise direkt angeordnet bzw. aufgebracht sein, indem etwa die Skalenstriche durch einen Laser-Abladier-Prozess oder durch ein Lithographieverfahren auf den zweiten Ringbereich, also direkt auf den Körper, geschrieben werden. Alternativ dazu kann aber auch die Winkelskalierung in den Körper im zweiten Ringbereich eingeprägt werden. Für beide Varianten bietet sich ein optisches Verfahren zur Abtastung der Winkelskalierung an. In weiterer Ausgestaltung der Erfindung kann am zweiten Ringbereich aber auch eine magnetische Teilung als Winkelskalierung angeordnet sein.

Die Erfindung umfasst im Übrigen auch Vorrichtungen bei der die Winkelskalierung am zweiten Ringbereich als ein eigenständiges Bauteil angeordnet ist, etwa als ein Maßband.

Mit Vorteil weist der Stegbereich in Richtung der Achse eine geometrische Ausdehnung auf, welche mindestens fünfmal kleiner ist (d₂/d₃ ≥ 5), insbesondere zehnmal kleiner ist (d₂/d₃ ≥ 10), als die größte geometrische Ausdehnung des zweiten Ringbereichs in Richtung der Achse. Besonders vorteilhaft ist es, wenn der Stegbereich in Richtung der Achse eine geometrische Ausdehnung aufweist, welche mindestens fünfzehnmal kleiner ist, als die größte geometrische Ausdehnung des zweiten Ringbereichs in Richtung der Achse (d₂/d₃ ≥ 15).

Damit der Körper eine ausreichende Steifigkeit, etwa für dessen Fertigungsprozess aufweist, ist mit Vorteil die geometrische Ausdehnung d₁ des ersten Ringbereichs größer als die geometrische Ausdehnung d₃ des Stegbereichs. Demnach weist also der Stegbereich in Richtung der Achse eine geringere geometrische Ausdehnung d₃ auf als die geometrische Ausdehnung des ersten Ringbereichs (d₃ < d₁).

In einer bevorzugten Ausgestaltung der Erfindung ist die Winkelskalierung außen auf eine Mantelseite eines zylindrischen, insbesondere eines hohlzylindrischen bzw. ringförmigen, Körpers aufgebracht.

Besonders vorteilhaft ausgestaltet ist der erfindungsgemäße Körper, wenn dieser als vergleichsweise schlanker Ringkörper ausgeführt ist. Derartige Ringkörper reagieren nämlich durch ihre Biegeweichheit besonders empfindlich gegenüber Ungenauigkeiten der Montagefläche des betreffenden Maschinenteils bzw. gegenüber Ungenauigkeiten der Aufspannfläche des Körpers selbst. Insbesondere bei Ringkörpern bei denen das Verhältnis des Außendurchmessers zum Innendurchmesser kleiner als 5, insbesondere kleiner als 3, mit Vorteil kleiner als 2 ist, ist das erfindungsgemäße Verfahren besonders vorteilhaft.

Wenn die Drehstellung eines Maschineteils über eine gesamte oder mehrere Umdrehungen messbar sein soll, weisen mit Vorteil der erste Ringbereich und der zweite Ringbereich, sowie der Stegbereich eine über 360° umlaufende Geometrie auf. Der Ringkörper ist also in diesem Fall als geschlossener Ring ausgeführt.

Die Erfindung ist jedoch nicht auf geschlossene Körper beschränkt, welche zylindrisch oder ringförmig ausgestaltet sind. Beispielsweise kann der Körper auch als Ringsegment ausgebildet sein, etwa wenn die Drehstellung eines Maschinenteils nicht über eine volle Umdrehung des Maschinenteils gemessen werden muss.

Die Erfindung weist insbesondere den Vorteil auf, dass die Montagefläche des Maschinenteils, an das der Körper mit der Winkelskalierung angebaut werden soll, eine vergleichsweise große Maßtoleranz, insbesondere in Bezug auf dessen Ebenheit, aufweisen kann, ohne dass die Messergebnisse der Drehstellung des Maschinenteils verschlechtert werden. Hinzu kommt, dass der erfindungsgemäße Körper mit der Winkelskalierung ein geringes Massenträgheitsmoment bei hoher Torsionssteifigkeit aufweist und deshalb für Anwendungen mit hohen Winkelbeschleunigungen besonders geeignet ist. Darüber hinaus ist der entsprechende Körper leicht und mit relativ wenig Aufwand zu fertigen.

Vorteilhafte Ausführungsformen des erfindungsgemäßen Verfahrens sind aus den Maßnahmen in den vom Anspruch 1 abhängigen Ansprüchen zu entnehmen.

Weitere Vorteile, sowie Einzelheiten des erfindungsgemäßen Körpers mit einer Winkelskalierung ergeben sich aus der nachfolgenden Beschreibung von Ausführungsbeispielen anhand der beiliegenden Figuren.

Es zeigen die
- Figur 1: eine perspektivische Ansicht eines erfindungsgemäßen Körpers mit einer Winkelskalierung,
- Figur 2a: einen Teilquerschnitt in radialer Richtung durch den Körper im angebauten Zustand, gemäß einem ersten Ausführungsbeispiel,
- Figur 2b: eine teilweise Seitenansicht auf den Körper mit der Winkelskalierung im angebauten Zustand,
- Figur 3: einen Teilquerschnitt in radialer Richtung durch den Körper gemäß einem zweiten Ausführungsbeispiel im angebauten Zustand,
- Figur 4: eine perspektivische Ansicht eines erfindungsgemäßen Körpers mit einer Winkelskalierung gemäß einem dritten Ausführungsbeispiel.

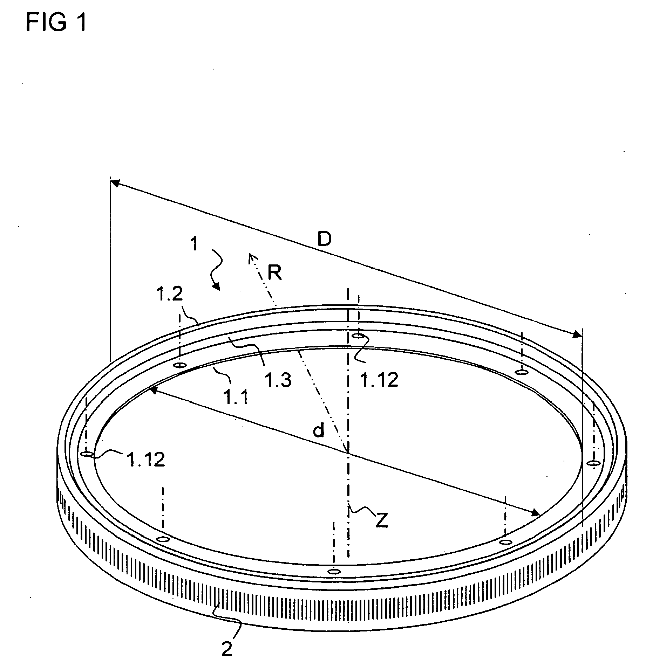

Gemäß der Figur 1 ist der entsprechende Körper in den vorgestellten Ausführungsbeispielen als Ringkörper 1 ausgestaltet. Dieser Ringkörper 1 weist einen ersten Ringbereich 1.1, einen zweiten Ringbereich 1.2 und einen Stegbereich 1.3 auf, wobei der Stegbereich 1.3 bezüglich einer radial ausgerichteten Linie R zwischen dem ersten Ringbereich 1.1 und dem zweiten Ringbereich 1.2 angeordnet ist. Der erste Ringbereich 1.1 ist flanschartig ausgestaltet und weist Bohrungen 1.12 auf, die entlang einer Kreislinie mit jeweils gleichem Winkelversatz angeordnet sind.

An der äußeren Mantelseite des zweiten Ringbereichs 1.2 ist eine Winkelskalierung 2 angeordnet. In den vorgestellten Ausführungsbeispielen wurde die Winkelskalierung 2 mit einem Laser-Abladier-Prozess direkt auf den Ringkörper aufgebracht ist. Zu diesem Zweck wurde die äußere Mantelseite des zweiten Ringbereichs 1.2 mit einer speziellen Lage beschichtet und dann eine Einzelstrichablation vorgenommen.

Alternativ dazu kann aber auch die eine Winkelskalierung 2 an einer Stirnseite oder an der inneren Mantelseite des zweiten Ringbereichs 1.2 angeordnet sein.

Die Winkelskalierung 2 ist so ausgestaltet, dass eine Drehstellung um eine Achse Z des Ringkörpers 1 detektierbar ist, das heißt, dass die Markierungen der Winkelskalierung 2 bei Drehung des Ringkörpers um die Achse Z einen Versatz in Umfangs- bzw. Drehrichtung aufweisen. Im gezeigten Ausführungsbeispiel ist die Winkelskalierung 2 derart ausgestaltet, dass eine optische Abtastung der Winkelskalierung 2 möglich ist. Durch Verwendung einer entsprechenden magnetischen Winkelskalierung bzw. Teilung kann alternativ dazu auch ein magnetisches Abtastprinzip angewendet werden.

Der Ringkörper 1 weist einen Außendurchmesser D und einen Innendurchmesser d auf. Im vorgestellten Ausführungsbeispiel beträgt der Außendurchmesser D = 250 mm und der Innendurchmesser d = 220 mm. Demnach beträgt hier das Verhältnis D/d = 250/220, also 1,14. Der Ringkörper 1 wird mit Hilfe eines Dreh- oder Schleifverfahrens möglichst präzise gefertigt, so dass die Mantelseite eine relativ geringe Rundheitsabweichung aufweist. Gerade bei Ringkörpern 1, welche im Vergleich zum Außendurchmesser D eine relativ große innere Öffnung aufweisen, also einen großen Innendurchmesser d (D/d vergleichsweise klein), sind die minimal fertigbaren Rundheitsabweichungen prinzipiell begrenzt, weil solche Ringkörper 1 durch ihre schlanke Bauweise leicht verformbar sind. So können beispielsweise schon durch das Spannen derartiger Ringkörper 1 in einer Bearbeitungsmaschine störende Durchbiegungen entstehen, welche zu Maßabweichungen des fertigen Ringkörpers 1 führen. Andererseits sind für bestimmte Anwendungen von Winkelmesssystemen, etwa für Pick-and-Place-Maschinen, gerade leichte, und damit auch schlanke, Ringkörper 1 gefordert, damit eine entsprechende Dynamik im Betrieb von z. B. derartiger Pick-and-Place-Maschinen, erreichbar ist.

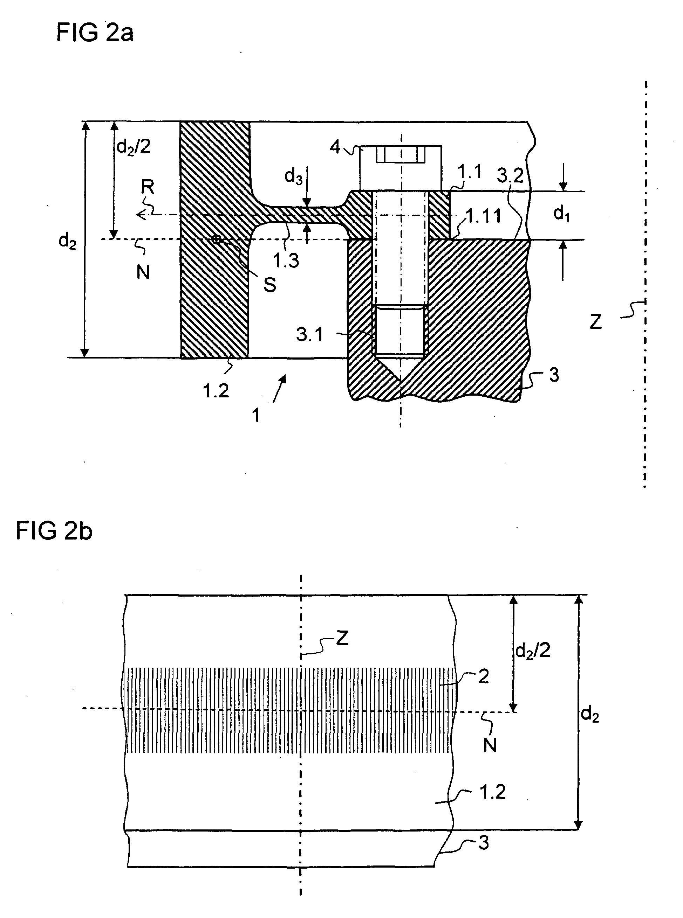

In der Figur 2a ist ein Teilquerschnitt in radialer Richtung durch den Ringkörper 1 und ein Maschinenteil, welches in den vorgestellten Ausführungsbeispielen eine Welle 3 ist, gezeigt. Damit die oben genannten Durchbiegungen während der Fertigung des Ringkörpers 1 minimiert werden, ist zur dessen Versteifung der erste Ringbereich 1.1 im Vergleich zum Stegbereich 1.3 dicker ausgeführt. Der Stegbereich 1.3 weist in Richtung der Achse Z also eine geringere geometrische Ausdehnung d₃ auf, als die geometrische Ausdehnung d₁ des ersten Ringbereichs 1.1.

Besonders bedeutsam im Hinblick auf genaue Messergebnisse eines entsprechenden Winkelmesssystems ist, dass die geometrische Ausdehnung d₃ des Stegbereichs 1.3 in Richtung der Achse Z geringer ist als die des zweiten Ringbereichs 1.2. Die absoluten geometrische Ausdehnung sind im gezeigten Ausführungsbeispiel d₁ = 0,8 mm, d₂ = 12 mm, d₃ = 0,5 mm. Das heißt, dass hier der Stegbereich 1.3 in Richtung der Achse Z eine geometrische Ausdehnung d₃ aufweist, welche 24-mal kleiner ist als die größte geometrische Ausdehnung d₂ des zweiten Ringbereichs 1.2 in Richtung der Achse Z. Es sind also hier die Bedingungen d₃ ≤ ¹/₂₄.d₂, bzw. d₂/d₃ ≥ 24 erfüllt. Im gezeigten Ausführungsbeispiel ist überdies der Stegbereich 1.3 der dünnste Bereich des Ringkörpers 1 (d₃<d₁<d₂).

Im ersten Ausführungsbeispiel ist im Übrigen der Stegbereich 1.3 relativ zum ersten Ringbereich 1.1 in Z-Richtung mittig angeordnet. Diese Anordnung ist in der Figur 2a gezeigt, indem die radial ausgerichtete Linie R sowohl den ersten Ringbereich 1.1 als auch den Stegbereich 1.3 mittig durchdringt bzw. die radial ausgerichtete Linie R die Symmetrieachse darstellt. Mit anderen Worten sind der erste Ringbereich 1.1 als auch der Stegbereich 1.3 derart ausgebildet, dass deren Querschnitte bezüglich der radial ausgerichteten Linie R symmetrisch sind. Der Stegbereich 1.3 selbst ist darüber hinaus auch derart ausgebildet, dass dessen Querschnitt alleine eine Geometrie aufweist, die bezüglich der radial ausgerichteten Linie R symmetrisch ist. Diese spezielle Gestaltung des Stegbereichs 1.2 hat sich für die Optimierung der Messergebnisse im Winkelmessgerät als besonders vorteilhaft erwiesen.

Die Querschnittsfläche des Ringkörpers 1 weist einen Flächenschwerpunkt S auf. Im gezeigten Ausführungsbeispiel kann die Lage des Flächenschwerpunkts S basierend auf den einzelnen Flächenschwerpunkten der im wesentlichen rechteckförmigen Bereiche (erste Ringbereich 1.1, zweiter Ringbereichs 1.2, Stegbereich 1.3) gebildet werden. Dadurch, dass der erste Ringbereich 1.1 die mit Abstand größte Querschnittsfläche aufweist, kommt der Flächenschwerpunkt S in der Nähe der Mitte der Querschnittsfläche des ersten Ringbereichs 1.1 zu liegen.

Durch den Flächenschwerpunkt S verläuft in radialer Richtung die Ebene N, die durch die Aufspannfläche1.11 gebildet wird. Somit liegt also die Ebene N in der Ebene, in der die neutralen Fasern des Ringkörpers 1 verlaufen. Im Idealfall ist die Winkelskalierung 2 so angeordnet, dass die Ebene N die Winkelskalierung 2 mittig schneidet (Figur 2b).

Die Welle 3, deren Drehstellung letztlich ermittelt werden soll, ist um die Achse Z drehbar und weist eine Stirnseite 3.2 auf, die im Rahmen der vorgegebenen Maßtoleranzen zwangsläufig Unebenheiten hat. In der Welle 3 sind Gewindebohrungen 3.1 vorgesehen, welche im gleichen Muster wie die Bohrungen 1.12 des ersten Ringbereichs 1.1 angeordnet sind.

Bei der Montage des Ringkörpers 1 wird der erste Ringbereich 1.1 bzw. dessen Aufspannfläche 1.11 auf die Stirnseite 3.2 der Welle 3 aufgesetzt. Die Aufspannfläche 1.11 liegt in einer geometrische Ebene, die orthogonal zur Achse Z angeordnet ist, wobei die Bohrungen 1.12 des ersten Ringbereichs 1.1 die Aufspannfläche 1.11 mit senkrechter Richtung (parallel zur Achse Z) durchdringen.

Nach dem Aufsetzen des Ringkörpers 1 erfolgt dessen Zentrierung bezüglich der Welle 3. Sodann wird die Aufspannfläche 1.11 des ersten Ringbereichs 1.1 gegen die Stirnseite 3.2 der Welle 3 durch Anziehen von Schrauben 4, die hier als Befestigungsmittel dienen, gedrückt. Die Bohrungen 1.12 sind parallel zur Achse Z orientiert. Demnach ist also der erste Ringbereich 1.1 derart ausgebildet ist, dass durch die Schrauben 4 der Ringkörper 1 an der Welle 3 fixiert ist, wobei die so erzeugte Fixierkraft in Richtung der Achse Z ausgerichtet ist. Der Ringkörper 1 wird also durch den ersten Ringbereich 1.1, der gleichsam als Flansch ausgebildet ist, mit der Welle 3 verbunden.

Auf Grund der fertigungsbedingten Unebenheiten sowohl an der Stirnseite 3.2 der Welle 3 als auch an der Aufspannfläche 1.11 des ersten Ringbereichs 1.1 passt sich beim Festziehen der Schrauben 4 der erste Ringbereich 1.1 geometrisch an die besagten Unebenheiten an und verformt sich entsprechend. Diese Verformung erzeugt aber keine nennenswerte radiale oder axiale Verformung des relativ starren zweiten Ringbereichs 1.2 und der an diesem angeordneten Winkelskalierung 2. Es hat sich gezeigt, dass es für die weitere Minimierung der montagebedingten Verformungen des Ringkörpers 1, insbesondere des zweiten Ringbereichs 1.2, von Vorteil ist, wenn die Aufspannfläche 1.11 bzw. die Montagefläche 3.2 in der Ebene N der neutralen Fasern angeordnet ist. Durch den vergleichsweise dünnen Stegbereich 1.3 werden keine unzulässig große radialen Verformungen und auch kein unzulässig großer Planschlag in den Bereich der Winkelskalierung 2 übertragen, wenngleich der Stegbereich 1.3 durchaus vergleichsweise große Deformationen aufweisen kann. Gleichwohl ist der Ringkörper 1 überaus torsionssteif und kann somit in Winkelmessgeräten eingesetzt werden, die in hochdynamischen Maschinen verwendet werden und die hohe Präzisionsforderungen erfüllen.

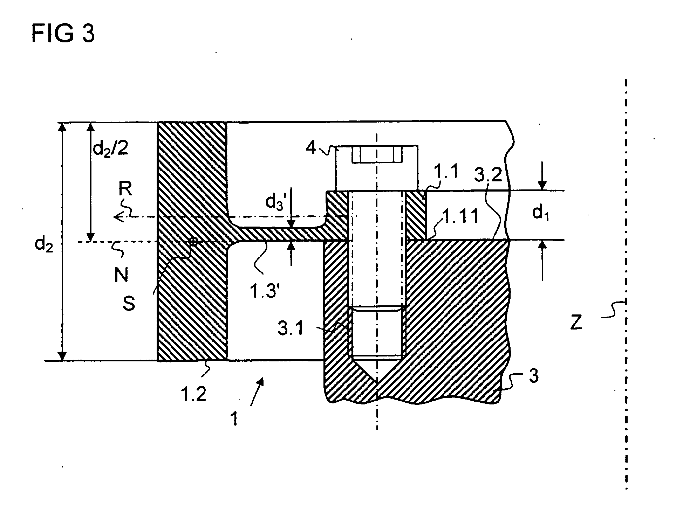

In der Figur 3 ist ein zweites Ausführungsbeispiel eines erfindungsgemäßen Ringkörpers 1 gezeigt. Der Ringkörper 1 weist hier eine gegenüber dem ersten Ausführungsbeispiel unterschiedliche Geometrie des Stegbereiches 1.3' auf. Der Vorteil dieser Ausführungsform liegt insbesondere darin, dass die Herstellung des Stegbereichs 1.3' mit vergleichsweise geringerem Aufwand möglich ist. Die untere Ringfläche des Stegbereichs 1.3' ist in der gleichen Ebene wie die Aufspannfläche 1.11 angeordnet, so dass hier eine durchgehende Ringfläche beim Drehprozess hergestellt werden kann. Lediglich an der oberen Seite des Stegbereichs 1.3' muss eine Rille eingedreht werden, damit schließlich die geringe geometrische Ausdehnung d₃' des Stegbereichs 1.3' in Richtung der Achse Z im Vergleich zur geometrische Ausdehnung d₂ des zweiten Ringbereichs 1.2 erreicht wird. Im zweiten Ausführungsbeispiel sind die absoluten geometrische Ausdehnung wie folgt bemessen d₁ = 0,8 mm, d₂ = 12 mm, d₃' = 0,5 mm. Das heißt, dass hier der Stegbereich 1.3' in Richtung der Achse Z eine geometrische Ausdehnung d₃' aufweist, welche etwa 24-mal kleiner ist als die größte geometrische Ausdehnung d₂ des zweiten Ringbereichs 1.2 in Richtung der Achse Z (d₃' ≤ ¹/₂₄·d₂, bzw. d₂/d₃' ≥ 24).

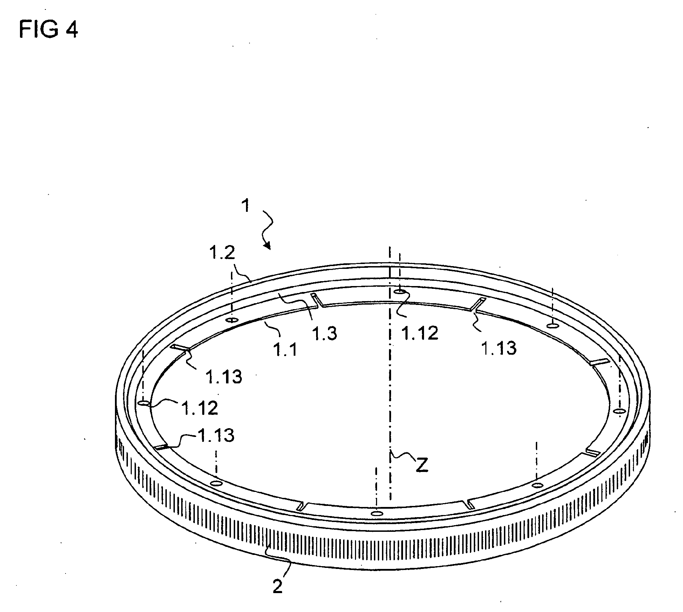

Ein drittes Ausführungsbeispiel der Erfindung ist in der Figur 4 dargestellt. Der erste Ringbereich 1.1 weist hier Schlitze 1.13 auf, durch welche sich der Ringkörper 1 in Richtung der Achse Z besonders an Unebenheiten auf der Welle 3 anpassen kann, ohne dass dies zu unzulässigen radialen oder axialen Verformungen im Bereich der Winkelskalierung 2 führt. Im gezeigten dritten Ausführungsbeispiel gemäß der Figur 4 sind die Schlitzte 1.13 radial ausgerichtet und zum Mittelpunkt des Ringkörpers 1 hin offen. Alternativ dazu können aber auch im ersten Ringbereich 1.1 Ausnehmungen vorgesehen sein, welche eine geschlossene Kontur aufweisen, also beispielsweise Langlöcher. Auf diese Weise kann die Torsionssteifigkeit um die Achse Z gegenüber der Variante mit den offenen Schlitzen 1.13 erhöht werden.

Ferner umfasst die Erfindungen auch Körper, bei denen die Schlitze 1.13 , bzw. entsprechende Ausnehmungen mit offener oder geschlossener Kontur, nicht nur den ersten Ringbereich 1.1 durchdringen, sondern auch den Stegbereich 1.3.

## Patentansprüche

1. Körper (1) mit einer Winkelskalierung (2), welcher zur Messung der Drehstellung eines Maschinenteils (3) um eine Achse (Z) drehbar ist, wobei der Körper (1) monolithisch ist und
• einen ersten Ringbereich (1.1), welcher zum Verbinden mit dem Maschinenteil (3) flanschartig ausgestaltet ist,
• einen zweiten Ringbereich (1.2), an dem die Winkelskalierung (2) angeordnet ist, und
• einen Stegbereich (1.3, 1.3') aufweist,
**dadurch gekennzeichnet, dass**
der Stegbereich (1.3, 1.3') zwischen dem ersten Ringbereich (1.1) und dem zweiten Ringbereich (1.2) angeordnet ist, und der Stegbereich (1.3, 1.3') in Richtung der Achse (Z) eine geometrische Ausdehnung (d₃, d₃') aufweist, welche mindestens dreimal kleiner ist als die größte geometrische Ausdehnung (d₂) des zweiten Ringbereichs (1.2) in Richtung der Achse (Z).

2. Körper (1) mit einer Winkelskalierung (2) gemäß dem Anspruch 1, **dadurch gekennzeichnet, dass** der Stegbereich (1.3, 1.3') in Richtung der Achse (Z) eine geometrische Ausdehnung (d₃, d₃') aufweist, welche mindestens fünfmal, insbesondere zehnmal, kleiner ist als die größte geometrische Ausdehnung (d₂) des zweiten Ringbereichs (1.2) in Richtung der Achse (Z).

3. Körper (1) mit einer Winkelskalierung (2) gemäß dem Anspruch 1 oder 2, **dadurch gekennzeichnet, dass** die Winkelskalierung (2) an der Mantelseite des zweiten Ringbereichs (1.2) angeordnet ist.

4. Körper (1) mit einer Winkelskalierung (2) gemäß dem Anspruch 2, **dadurch gekennzeichnet, dass** der erste Ringbereich (1.1) eine Aufspannfläche (1.11) aufweist.

5. Körper (1) mit einer Winkelskalierung (2) gemäß dem Anspruch 4, **dadurch gekennzeichnet, dass** in die Aufspannfläche (1.11) in einer geometrische Ebene (N) liegt, die orthogonal zur Achse (Z) angeordnet ist.

6. Körper (1) mit einer Winkelskalierung (2) gemäß dem Anspruch 5, **dadurch gekennzeichnet, dass** die geometrische Ebene (N) der Aufspannfläche (1.11) den Flächenschwerpunkt (S) der Querschnittsfläche des Körpers (1) schneidet.

7. Körper (1) mit einer Winkelskalierung (2) gemäß dem Anspruch 1, **dadurch gekennzeichnet, dass** der Stegbereich (1.3, 1.3') in Richtung der Achse (Z) eine geringere geometrische Ausdehnung (d₃, d₃') aufweist als die geometrische Ausdehnung (d₁) des ersten Ringbereichs (1.1).

8. Körper (1) mit einer Winkelskalierung (2) gemäß einem der vorhergehenden Ansprüche, **dadurch gekennzeichnet, dass** der erste Ringbereich (1.1), der zweite Ringbereich (1.2) sowie der Stegbereich (1.3, 1.3') eine über 360° umlaufende Geometrie aufweisen.

9. Körper (1) mit einer Winkelskalierung (2) gemäß einem der vorhergehenden Ansprüche, **dadurch gekennzeichnet, dass** der Stegbereich (1.3) derart ausgebildet ist, dass dessen Querschnitt eine Geometrie aufweist, die bezüglich einer radial ausgerichteten Linie (R) symmetrisch ist.

10. Körper (1) mit einer Winkelskalierung (2) gemäß dem Anspruch 9, **dadurch gekennzeichnet, dass** sowohl der erste Ringbereich (1.1) als auch der Stegbereich (1.3) derart ausgebildet sind, dass deren Querschnitte bezüglich einer radial ausgerichteten Linie (R) symmetrisch sind

11. Körper (1) mit einer Winkelskalierung (2) gemäß einem der vorhergehenden Ansprüche, **dadurch gekennzeichnet, dass** der erste Ringbereich (1.1) derart ausgebildet ist, dass durch mindestens ein Befestigungsmittel (4) der Körper (1) am Maschinenteil (3) fixiert ist und die Fixierkraft in Richtung der Achse (Z) ausgerichtet ist.

12. Körper (1) mit einer Winkelskalierung (2) gemäß einem der vorhergehenden Ansprüche, **dadurch gekennzeichnet, dass** die Winkelskalierung (2) direkt auf dem zweiten Ringbereich (1.2) aufgebracht ist.

13. Körper (1) mit einer Winkelskalierung (2) gemäß dem Anspruch 12, **dadurch gekennzeichnet, dass** die Winkelskalierung (2) mit einem Laser-Abladier-Prozess oder durch ein Lithographieverfahren aufgebracht ist.

14. Körper (1) mit einer Winkelskalierung (2) gemäß einem der vorhergehenden Ansprüche, **dadurch gekennzeichnet, dass** der Körper (1) einen Außendurchmesser D und einen Innendurchmesser d aufweist und das Verhältnis D/d kleiner ist als 5.

## Claims

1. Body (1) with an angle scale (2), which is rotatable about an axis (Z) for measuring the rotational position of a machine part (3), the body (1) being monolithic and having
• a first annular region (1.1), which is designed in the manner of a flange for connecting to the machine part (3),
• a second annular region (1.2), on which the angle scale (2) is arranged, and
• a crosspiece region (1.3, 1.3'),
**characterized in that**
the crosspiece region (1.3, 1.3') is arranged between the first annular region (1.1) and the second annular region (1.2), and the crosspiece region (1.3, 1.3') has in the direction of the axis (Z) a geometrical extent (d₃, d₃') that is at least three times less than the greatest geometrical extent (d₂) of the second annular region (1.2) in the direction of the axis (Z).

2. Body (1) with an angle scale (2) according to Claim 1, **characterized in that** the crosspiece region (1.3, 1.3') has in the direction of the axis (Z) a geometrical extent (d₃, d₃') that is at least five times, in particular ten times, less than the greatest geometrical extent (d₂) of the second annular region (1.2) in the direction of the axis (Z).

3. Body (1) with an angle scale (2) according to Claim 1 or 2, **characterized in that** the angle scale (2) is arranged on the lateral side of the second annular region (1.2).

4. Body (1) with an angle scale (2) according to Claim 2, **characterized in that** the first annular region (1.1) has a clamping surface (1.11).

5. Body (1) with an angle scale (2) according to Claim 4, **characterized in that** the clamping surface (1.11) lies in a geometrical plane (N) that is arranged orthogonally in relation to the axis (Z).

6. Body (1) with an angle scale (2) according to Claim 5, **characterized in that** the geometrical plane (N) of the clamping surface (1.11) intersects the centroid (S) of the cross-sectional area of the body (1).

7. Body (1) with an angle scale (2) according to Claim 1, **characterized in that** the crosspiece region (1.3, 1.3') has in the direction of the axis (Z) a smaller geometrical extent (d₃, d₃') than the geometrical extent (d₁) of the first annular region (1.1).

8. Body (1) with an angle scale (2) according to one of the preceding claims, **characterized in that** the first annular region (1.1), the second annular region (1.2) and the crosspiece region (1.3, 1.3') have a geometry encompassing 360°.

9. Body (1) with an angle scale (2) according to one of the preceding claims, **characterized in that** the crosspiece region (1.3) is formed in such a way that the cross section thereof has a geometry that is symmetrical with respect to a radially directed line (R).

10. Body (1) with an angle scale (2) according to Claim 9, **characterized in that** both the first annular region (1.1) and the crosspiece region (1.3) are formed in such a way that the cross sections thereof are symmetrical with respect to a radially directed line (R).

11. Body (1) with an angle scale (2) according to one of the preceding claims, **characterized in that** the first annular region (1.1) is formed in such a way that the body (1) is fixed on the machine part (3) by at least one fastening means (4) and the fixing force is directed in the direction of the axis (Z).

12. Body (1) with an angle scale (2) according to one of the preceding claims, **characterized in that** the angle scale (2) is applied directly to the second annular region (1.2).

13. Body (1) with an angle scale (2) according to Claim 12, **characterized in that** the angle scale (2) is applied by a laser ablation process or by a lithographic process.

14. Body (1) with an angle scale (2) according to one of the preceding claims, **characterized in that** the body (1) has an outer diameter D and an inner diameter d and the ratio of D/d is less than 5.

## Revendications

1. Corps (1) comprenant une échelle d'angle (2), qui peut être tournée pour mesurer la position angulaire d'une pièce de machine (3) autour d'un axe (Z),
le corps (1) étant monolithique et présentant
- une première région annulaire (1.1) configurée à la manière d'une bride pour être reliée à la pièce de machine (3),
- une deuxième région annulaire (1.2), sur laquelle est disposée l'échelle d'angle (2), et
- une région de nervure (1.3, 1.3'),
**caractérisé en ce que**
la région de nervure (1.3, 1.3') est disposée entre la première région annulaire (1.1) et la deuxième région annulaire (1.2), et la région de nervure (1.3, 1.3') présente, dans la direction de l'axe (Z), une étendue géométrique (d₃, d₃') qui est au moins trois fois plus petite que la plus grande étendue géométrique (d₂) de la deuxième région annulaire (1.2) dans la direction de l'axe (Z).

2. Corps (1) comprenant une échelle d'angle (2) selon la revendication 1, **caractérisé en ce que** la région de nervure (1.3, 1.3') présente, dans la direction de l'axe (Z), une étendue géométrique (d₃, d₃') qui est au moins cinq fois plus petite, en particulier dix fois plus petite, que la plus grande étendue géométrique (d₂) de la deuxième région annulaire (1.2) dans la direction de l'axe (Z).

3. Corps (1) comprenant une échelle d'angle (2) selon la revendication 1 ou 2, **caractérisé en ce que** l'échelle d'angle (2) est disposée sur le côté d'enveloppe de la deuxième région annulaire (1.2).

4. Corps (1) comprenant une échelle d'angle (2) selon la revendication 2, **caractérisé en ce que** la première région annulaire (1.1) présente une surface de fixation (1.11).

5. Corps (1) comprenant une échelle d'angle (2) selon la revendication 4, **caractérisé en ce que** la surface de fixation (1.11) se situe dans un plan géométrique (N) qui est disposé perpendiculairement à l'axe (Z).

6. Corps (1) comprenant une échelle d'angle (2) selon la revendication 5, **caractérisé en ce que** le plan géométrique (N) de la surface de fixation (1.11) coupe le centre de gravité de surface (S) de la surface en section transversale du corps (1).

7. Corps (1) comprenant une échelle d'angle (2) selon la revendication 1, **caractérisé en ce que** la région de nervure (1.3, 1.3') présente, dans la direction de l'axe (Z), une étendue géométrique (d₃, d₃') inférieure à l'étendue géométrique (d₁) de la première région annulaire (1.1).

8. Corps (1) comprenant une échelle d'angle (2) selon l'une quelconque des revendications précédentes, **caractérisé en ce que** la première région annulaire (1.1), la deuxième région annulaire (1.2) ainsi que la région de nervure (1.3, 1.3') présentent une géométrie sur une circonférence de 360°.

9. Corps (1) comprenant une échelle d'angle (2) selon l'une quelconque des revendications précédentes, **caractérisé en ce que** la région de nervure (1.3) est réalisée de telle sorte que sa section transversale présente une géométrie qui est symétrique par rapport à une ligne (R) orientée radialement.

10. Corps (1) comprenant une échelle d'angle (2) selon la revendication 9, **caractérisé en ce que** la première région annulaire (1.1) ainsi que la région de nervure (1.3) sont réalisées de telle sorte que leurs sections transversales soient symétriques par rapport à une ligne (R) orientée radialement.

11. Corps (1) comprenant une échelle d'angle (2) selon l'une quelconque des revendications précédentes, **caractérisé en ce que** la première région annulaire (1.1) est réalisée de telle sorte que le corps (1) soit fixé à la pièce de machine (3) par au moins un moyen de fixation (4) et que la force de fixation soit orientée dans la direction de l'axe (Z).

12. Corps (1) comprenant une échelle d'angle (2) selon l'une quelconque des revendications précédentes, **caractérisé en ce que** l'échelle d'angle (2) est directement appliquée sur la deuxième région annulaire (1.2).

13. Corps (1) comprenant une échelle d'angle (2) selon la revendication 12, **caractérisé en ce que** l'échelle d'angle (2) est appliquée par un processus d'ablation laser ou par un procédé lithographique.

14. Corps (1) comprenant une échelle d'angle (2) selon l'une quelconque des revendications précédentes, **caractérisé en ce que** le corps (1) présente un diamètre extérieur D et un diamètre intérieur d et le rapport D/d est inférieur à 5.
